# EUROPÄISCHE PATENTSCHRIFT

(11) **EP 1 520 477 B1**
(45) Veröffentlichungstag und Bekanntmachung des Hinweises auf die Patenterteilung: **03.01.2007**
(21) Anmeldenummer: 03405863.6
(22) Anmeldetag: 04.12.2003
(51) Int. Cl.: A21C 11/16

(54) **Füllvorrichtung für gefüllte Lebensmittel**
Stuffing device for stuffed food products
Appareil pour la production de produits alimentaires fourrés

(30) Priorität: 02.10.2003 EP 03405711
(43) Veröffentlichungstag der Anmeldung: 06.04.2005
(73) Patentinhaber: SEEWER AG, CH-3400 Burgdorf (CH)
(72) Erfinder: Zwahlen, Andreas, 3415 Hasle-Rüegsau (CH)
(74) Vertreter: Roshardt, Werner Alfred

(56) Entgegenhaltungen:
- EP-A- 0 273 762
- WO-A-02/28190
- DE-U- 8 715 463
- US-A- 5 517 904

## Beschreibung

Die Erfindung betrifft eine Vorrichtung mit zumindest einem Ausgang zum Aufbringen einer Füllung auf eine teigartige Lebensmittelmasse, insbesondere einen Teig, sowie je einem Ausstosszylinder und einem Ausstosselement für den zumindest einen Ausgang, wobei die Füllung mit dem Ausstosselement aus dem Ausstosszylinder ausstoss- und durch den zumindest einen Ausgang auf die Lebensmittelmasse aufbringbar ist.

### Stand der Technik

Gefüllte Lebensmittel, insbesondere gefüllte Backwaren erfreuen sich grosser Beliebtheit. Zum Füllen solcher Lebensmittel gibt es verschiedene Systeme. Bekannt sind beispielsweise Kolbensysteme, bei welchen die Füllung in einen Zylinder befördert und mit einem Kolben aus dem Zylinder ausgestossen und dabei auf ein Teigstück auf-oder darin eingebracht wird. Ein derartiges System ist beispielsweise in der FR 2 716 078 beschrieben. Dieses System umfasst einen Trichter (6) zum Einfüllen der Füllung. Am unteren Ende des Trichters befindet sich ein Kanal (5), durch welchen hindurch die Füllung in eine Kammer (3) gelangt. Diese Kammer ist auf einer Seite mit einer Öffnung versehen, durch welche die Füllung mit einem Kolben (7) heraus gepresst wird.

Bei einem anderen System zum Füllen solcher Backwaren wird die Füllung mit Hilfe einer sogenannten Schnecke aus dem Zylinder ausgestossen. Solche Systeme sind ähnlich aufgebaut wie Kolbensysteme. Anstatt eines Kolbens, der eine Hin- und Herbewegung ausführt und auf diese Weise die Füllung aus dem Zylinder ausstösst, ist in dem Zylinder jedoch eine Schneckenschraube vorgesehen, welche mittels einer Rotationsbewegung die Füllung aus dem Zylinder ausstösst.

Ein Nachteil der Kolbensysteme besteht darin, dass damit im Gegensatz zu den Schneckensystemen die Füllung nicht kontinuierlich ausgegeben werden kann. Durch eine hohe Frequenz des Kolbens lässt sich lediglich ein quasi-kontinuierlicher Füllungsstreifen ausgeben, wobei die Geschwindigkeit und Fördermenge im Vergleich mit den Schneckensystemen jedoch gering ist.

Umgekehrt ist es bei den Schneckensystemen nur schwer möglich, einzelne FüllungsTupfen auf den Teig aufzubringen. Zwar lässt sich durch jeweils eine kurzzeitige Drehung und anschliessendes Stoppen der Schnecke eine kleine Füllungsmenge ausgeben. Aber verglichen mit den Kolbensystemen, die das Aufbringen einzelner Tupfen mit hoher Frequenz ermöglichen, ist die erreichbare Frequenz bei den Schneckensystemen eher gering.

Beide Systeme sind folglich auf bestimmte Anwendungen spezialisiert. Wenn man eine Füllung sowohl kontinuierlich mit hoher Geschwindigkeit als auch als einzelne Tupfen mit hoher Frequenz ausgeben will, müssen mehrere Systeme angeschafft werden.

Um die Produktionsmenge gefüllter Backwaren zu erhöhen, umfassen derartige Füllmaschinen typischerweise mehrere Ausgänge, mit welchen die Füllung gleichzeitig auf mehrere parallele Teigbahnen aufgebracht werden kann. Allerdings besteht auch hier die Einschränkung, dass die Füllung auf sämtliche Bahnen entweder mit Kolben- oder mit Schneckensystemen aufgebracht werden kann.

### Darstellung der Erfindung

Aufgabe der Erfindung ist es, eine dem eingangs genannten technischen Gebiet zugehörende Vorrichtung zu schaffen, welche die Probleme beim Stand der Technik vermeidet und insbesondere eine Möglichkeit bietet, eine Füllung sowohl kontinuierlich und mit hoher Geschwindigkeit, als auch als einzelne Tupfen mit hoher Frequenz auf eine teigartige Lebensmittelmasse aufzubringen.

Die Lösung der Aufgabe ist durch die Merkmale des Anspruchs 1 definiert. Die Vorrichtung zum Aufbringen der Füllung auf eine teigartige Lebensmittelmasse weist zumindest einen Ausgang auf, wobei jeder Ausgang einen Ausstosszylinder und ein Ausstosselement umfasst. Die Füllung wird mit dem Ausstosselement aus dem Ausstosszylinder ausgestossen und durch den zumindest einen Ausgang auf die Lebensmittelmasse aufgebracht. Gemäss der Erfindung umfasst jedes Ausstosselement entweder einen Kolben oder eine Schnecke, wobei ein Ausstosselement mit einem Kolben durch ein Ausstosselement mit einer Schnecke auswechselbar ist. Umgekehrt ist erfindungsgemäss natürlich auch ein Ausstosselement mit einer Schnecke durch eines mit einem Kolben auswechselbar. Das Ausstossen der Füllung erfolgt bei einem Kolben durch eine Vorwärts- und Rückwärtsbewegung des Kolbens im Ausstosszylinder und bei einer Schnecke durch eine Rotationsbewegung der Schnecke im Ausstosszylinder.

Indem die Ausstosselemente auswechselbar sind, kann für jeden Ausgang gewählt werden, ob zum Ausstossen der Füllung ein Kolben oder eine Schnecke verwendet werden soll. Damit ist es möglich, die Vorteile beider Systeme in einer Vorrichtung zu vereinen und die Nachteile beider Systeme zu vermeiden. D. h. mit einer einzigen Vorrichtung können praktisch sämtliche Anforderung an die herzustellenden Backwaren erfüllt werden. Werden bei sämtlichen oder einzelnen Ausgängen kontinuierliche Füllungsstreifen benötigt, können die entsprechenden Ausgänge einfach mit Schnecken ausgestattet werden. Werden bei sämtlichen oder einzelnen Ausgängen hingegen einzelne Füllungstupfen benötigt, können diese Ausgänge einfach mit Kolben ausgestattet werden. Die Erfindung erlaubt somit nicht nur, je nach Anforderung Kolben oder Schnecken zum Ausstossen der Füllung einzusetzen, sie ermöglicht darüber hinaus auch die gleichzeitige Verwendung von Schnecken und Kolben bei verschiedenen Ausgängen der Vorrichtung.

Weiter kann beim Umstellen einer Produktionslinie von einem Produkt auf ein anderes Produkt unter Umständen viel Zeit eingespart werden, da nämlich nicht mehr die ganze Füllvorrichtung ausgebaut und eine neue eingesetzt werden muss. Es reicht, wenn die notwendigen Ausstosselemente ausgewechselt werden. Die Produktionslinien sind folglich schneller wieder betriebsbereit und die Standzeiten der Produktionslinien können reduziert und die Produktivität gesteigert werden.

Bei der teigartigen Lebensmittelmasse handelt es sich um eine typischerweise mehr oder weniger feste, aber formbare Masse aus beliebigen Lebensmitteln. Unter dem Begriff teigartige Lebensmittelmasse wird jedoch insbesondere ein Teig verstanden, der durch Verkneten von beispielsweise Mehl, Griess, Kartoffeln, Fett, Eiern, Quark, Zucker und Ähnlichem mit Flüssigkeiten hergestellt wird. Nachfolgend wird daher für den allgemeineren Begriff teigartige Lebensmittelmasse jeweils der kürzere Begriff Teig verwendet.

Bei der Füllung handelt es sich um eine beliebige, mehr oder weniger flüssige oder zähflüssige Masse aus Lebensmitteln. Die Lebensmittel werden hierbei typischerweise kleingeschnitten, zerhackt oder püriert. Die Zusammensetzung einer Füllung kann praktisch beliebig gewählt werden. Sie kann beispielsweise Fleisch, Gemüse oder auch gesüsste Lebensmittel enthalten. Auch Pasten oder Cremes eignen sich als Füllung.

Das Füllen des Teiges kann je nach der Art und der Form des Lebensmittels anders erfolgen. Die Füllung kann z. B. einfach auf ein mehr oder weniger flaches Stück Teig aufgebracht werden, welches danach weiter verarbeitet, beispielsweise gewickelt, werden kann. Bei anderen Lebensmitteln wird die Füllung z. B. direkt in die Teigmasse hinein eingespritzt. Bei Backwaren kann das Füllen zudem sowohl vor, als auch nach dem Backen erfolgen. Der Einfachheit halber wird daher nachfolgend der Ausdruck "aufbringen einer Füllung auf einen Teig" verwendet, der unabhängig von der konkreten Art und dem Zeitpunkt des Füllens sämtliche Füllvorgänge umfassen soll.

Grundsätzlich könnte jeder Kolben bzw. jede Schnecke mit einem eigenen Antrieb zur Erzeugung der jeweiligen Ausstossbewegung ausgerüstet werden. Mit Vorteil umfasst die Vorrichtung allerdings zumindest einen Antrieb zur Erzeugung einer Antriebsbewegung sowie je zumindest ein Getriebe pro Ausgang zur Umwandlung der Antriebsbewegung in die für das Ausstosselement dieses Ausgangs notwendige Ausstossbewegung. Bei einem Kolben wandelt das entsprechende Getriebe die Antriebsbewegung in eine Vorwärts- und Rückwärtsbewegung des Kolbens und bei einer Schnecke in eine Rotationsbewegung um.

Bei einer bevorzugten Ausführungsform der Erfindung umfasst diese zwei separate Antriebe. Ein pneumatischer Antrieb erzeugt die Vorwärts- und Rückwärtsbewegung der eingesetzten Kolben und ein motorischer Antrieb erzeugt die Rotationsbewegung der eingesetzten Schnecken. Hierbei werden die Antriebsbewegungen durch entsprechende Mehrfachgetriebe in die Ausstossbewegungen der einzelnen Kolben bzw. Schnecken umgewandelt.

Selbstverständlich ist es aber auch möglich, sowohl für die Kolben als auch für die Schnecken andere Antriebe wie beispielsweise einen hydraulischen, pneumatischen oder motorischen Antrieb zu verwenden. Gegebenenfalls werden einfach entsprechende Getriebe zwischen Antrieb und Kolben bzw. Schnecken geschaltet.

Bei unterschiedlichen Backwaren kann es notwendig sein, dass die Füllmenge, d. h. die Menge der Füllung, die bei einem Ausgang der Füllvorrichtung ausgestossen werden soll, unterschiedlich gross sein soll. Zum Variieren der Füllmenge gibt es mehrere Möglichkeiten.

Beim Ausstossen der Füllung mit einer Schnecke kann die Füllmenge z. B. durch Variieren der Winkelgeschwindigkeit der Rotationsbewegung der Schnecke verändert werden. Je schneller sich die Schnecke dreht, desto grösser ist die Füllmenge, die pro Zeiteinheit auf den Teig aufgebracht wird.

Weiter kann die Füllmenge bei einem Schneckensystem auch durch die Form der Schnecke beeinflusst werden. Weist die Schnecke beispielsweise eine kleine Steigung auf, ist die Füllmenge kleiner als bei einer Schnecke mit grosser Steigung.

Bei mit Kolben bestückten Ausgängen sieht es folgendermassen aus: Bei der Hin- und Herbewegung des Kolbens im Ausstosszylinder gibt es zwei Umkehrpunkte. Im vorderen Umkehrpunkt geht der Kolben von der Vorwärtsbewegung über in die Rückwärtsbewegung. Umgekehrt geht der Kolben im hinteren Umkehrpunkt von der Rückwärts- in die Vorwärtsbewegung über. Bei der Rückwärtsbewegung des Kolbens wird der Ausstosszylinder durch eine Befüllungsöffnung im Ausstosszylinder mit der Füllung befüllt. Bei der Vorwärtsbewegung wiederum wird die Füllung im Ausstosszylinder durch den Kolben aus dem Ausstosszylinder ausgestossen.

Die Füllmenge lässt sich in diesem Fall einstellen, indem beispielsweise die Frequenz, mit welcher der Kolben die Vorwärts- und Rückwärtsbewegung ausführt, verändert wird. Damit bleibt zwar die Füllmenge pro Hub konstant, aber die Anzahl Hübe pro Zeiteinheit steigt und damit auch die Füllmenge pro Zeiteinheit.

Weiter kann auch die Füllmenge pro Hub eingestellt werden. Dies geschieht vorzugsweise, indem die Position des vorderen und gleichzeitig auch die des hinteren Umkehrpunktes relativ zur Befüllungsöffnung im Ausstosszylinder variiert wird. D. h. beide Umkehrpunkte werden gleichzeitig, um die gleiche Distanz und in die gleiche Richtung verschoben, was quasi einer Verschiebung der Nullposition der Kolbenbewegung relativ zum Ausstosszylinder bzw. relativ zur Befüllungsöffnung entspricht. Werden die beiden Umkehrpunkte beispielsweise in Richtung der Rückwärtsbewegung des Kolbens verschoben, stösst der Kolben pro Hub weniger Füllung aus.

Bei der Einstellung der Füllmenge gilt es jedoch zu beachten, dass unabhängig davon, ob die Füllung mit einem Kolben oder einer Schnecke auf den Teig aufgebracht wird, die Geschwindigkeit, mit welcher sich der Teig relativ zu den Ausgängen der Füllvorrichtung bewegt, ebenfalls einen Einfluss auf die Füllungsmenge pro Teigfläche hat. Ebenso kann die Konsistenz der Füllung einen Einfluss auf die Füllmenge haben.

Durch das Variieren der oben genannten Parameter kann sich zudem auch das Ausstossverhalten der Füllung ändern, was unter Umständen ebenfalls einen Einfluss auf die Füllmenge haben kann.

Bei einer bevorzugten Ausführungsform der Erfindung ist die Vorrichtung derart ausgebildet, dass die beiden Umkehrpunkte nicht nur gemeinsam verschoben werden können, sondern dass die Position des hinteren Umkehrpunktes und/oder die Position des vorderen Umkehrpunktes unabhängig von der Position des jeweils anderen Umkehrpunktes einstellbar ist.

Einerseits ist es bei kleinen Füllmengen beispielsweise nämlich nicht notwendig, dass der Kolben die Rückwärtsbewegung vollständig ausführt, damit der Ausstosszylinder durch die Befüllungsöffnung ausreichend befüllt werden kann. Entsprechend kann die Rückwärtsbewegung durch Verschieben des hinteren Umkehrpunktes in Richtung des vorderen Umkehrpunktes vorzeitig abgebrochen werden. Dies wiederum erlaubt es, die Frequenz, mit welcher sich der Kolben im Ausstosszylinder hin- und herbewegt, noch weiter zu erhöhen.

Andererseits ist es durch Variieren des vorderen Umkehrpunktes möglich, die Füllmenge einzustellen. Können die beiden Umkehrpunkte unabhängig voneinander reguliert werden, können folglich die Füllmenge wie auch die Hubfrequenz unabhängig voneinander optimal auf die jeweilige Anwendung eingestellt werden.

Die soeben beschriebenen Möglichkeiten zum Verschieben des vorderen bzw. hinteren Umkehrpunktes gelten insbesondere für Füllvorrichtungen, welche ausschliesslich Kolben als Ausstosselemente verwenden.

Die Vorrichtung ist hierfür derart ausgebildet, dass die Position eines der beiden Umkehrpunkte jeweils unabhängig von der Position des anderen Umkehrpunktes einstellbar ist. Durch Verschieben des vorderen Umkehrpunktes kann z. B. die Füllmenge pro Hub variiert werden. Durch Verschieben des hinteren Umkehrpunktes wiederum kann eingestellt werden, an welchem Ort die Rückwärtsbewegung des Kolbens abgebrochen und die Vorwärtsbewegung eingeleitet werden soll. Dies erlaubt es, die Frequenz, mit welcher sich der Kolben im Ausstosszylinder hin- und herbewegt, weiter zu erhöhen.

Die Vorrichtung bietet folglich die Möglichkeit, sowohl die Füllmenge pro Hub als auch die Hubfrequenz des Kolbens im Ausstosszylinder unabhängig voneinander einzustellen.

Die Füllvorrichtung ist vorzugsweise derart ausgebildet, dass die Position des vorderen Umkehrpunktes unter Beibehaltung der Position des hinteren Umkehrpunktes variiert werden kann. Durch die Variierung des vorderen Umkehrpunktes kann wie bereits erwähnt die Füllmenge pro Hub des Kolbens eingestellt werden. Bleibt hierbei die Position des hinteren Umkehrpunktes unverändert, verändert sich gleichzeitig der Weg des Kolbens und damit die Hubfrequenz. D. h. wird der vordere Umkehrpunkt in Richtung des hinteren Umkehrpunktes verschoben, wird die Füllmenge verkleinert und gleichzeitig wird der Kolbenweg kleiner und damit die Hubfrequenz gleichzeitig grösser. Wird der vordere Umkehrpunkt hingegen nach vorn vom hinteren Umkehrpunkt weg verschoben, wird die Füllmenge grösser und die Hubfrequenz gleichzeitig kleiner.

Um die Position des hinteren Umkehrpunktes festzulegen, umfasst die Füllvorrichtung vorzugsweise einen Umschalter, mit welchem die Bewegungsrichtung des Kolbens umgeschaltet werden kann, wenn der Kolben bei seiner Rückwärtsbewegung eine bestimmte Position erreicht hat.

Die Verschiebung des hinteren Umkehrpunktes könnte jedoch nicht nur mittels einer Positionsbestimmung des Kolbens erfolgen, sondern beispielsweise auch durch eine geeignete zeitliche Steuerung des entsprechenden Antriebes realisiert werden.

Auch die Bestimmung der Position des Kolbens ist auf vielfältige Art und Weise möglich. Optische, mechanische oder elektrische/elektronische oder auch magnetische Sensoren eignen sich hierfür.

Bei einer vorteilhaften weil kostengünstigen Ausführungsform der Erfindung erfolgt die Positionsbestimmung mechanisch durch einen Anschlag, der derart mit dem Kolben gekoppelt ist, dass der Umschalter durch den Anschlag aktiviert wird, wenn der Kolben bei seiner Rückwärtsbewegung die gewünschte, eingestellte Position erreicht hat. Hierbei kann, falls gewünscht, die für die jeweilige Anwendung optimale Umkehrposition eingestellt werden, indem entweder der Anschlag oder der Umschalter verschoben wird.

Grundsätzlich ist es möglich, sowohl den Anschlag wie auch den Umschalter beliebig zu positionieren. Die Vorrichtung ist allerdings insbesondere derart ausgebildet, dass der Umschalter in Bezug auf den Ausstosszylinder räumlich fixiert und der Anschlag bewegungsmässig mit dem Kolben gekoppelt ist. Dadurch bewegt sich der Anschlag quasi gemeinsam mit dem Kolben hin und her und aktiviert bei der Rückwärtsbewegung des Kolbens jeweils im richtigen Moment den Umschalter.

Bei einer vorteilhaften Ausführungsform der Erfindung wird zum Antreiben der Kolben bevorzugt ein pneumatischer Antrieb mit einem Antriebszylinder, einem Antriebskolben und einer mit dem Antriebskolben verbundenen Antriebskolbenstange eingesetzt. Die Antriebskolbenstange ihrerseits ist drehbar mit einem Hebel verbunden, der an einer Drehachse befestigt ist. Die Hin- und Herbewegung der Kolbenstange wird von diesem Hebel auf die Drehachse übertragen, welche dadurch abwechselnd in die eine und die andere Richtung rotiert. Über weitere Hebel, welche ebenfalls an der Drehachse befestigt sind, werden dann die einzelnen Kolben angetrieben. Dadurch kann der Aufwand zum Umsetzen der Antriebsbewegung in die Hin- und Herbewegung der Kolben minimiert werden. Der Anschlag ist in diesem Fall in Bezug auf die Antriebskolbenstange räumlich fixiert, d.h. insbesondere an der Kolbenstange oder an dem Hebel, welcher die Antriebsbewegung auf die Drehachse überträgt, befestigt.

Zwar wäre auch bei solchen Füllvorrichtungen ein motorischer Antrieb möglich, aber der Aufwand zum Umwandeln der Rotationsbewegung des Motors in die Hin- und Herbewegung der Kolben wäre grösser.

Um hier nun die Position des vorderen Umkehrpunktes zu verschieben, muss lediglich der Antriebszylinder in Bezug auf den Ausstosszylinder verschoben werden. Wird beispielsweise der Antriebszylinder in Bewegungsrichtung des Antriebskolbens verschoben, ändert sich damit quasi die Nullposition des Antriebskolbens bzw. des Kolbens im Ausstosszylinder und damit auch die Füllmenge sowie die Ausstossfrequenz.

Unabhängig davon, ob die Füllung mit einem Kolben oder einer Schnecke ausgestossen wird, kann bei einer weiteren Ausführungsform der Erfindung zum Einstellen der Füllmenge vorzugsweise auch der Querschnitt eines Ausstosszylinders variiert werden. Bei Ausstosszylindern mit kreisförmigem Querschnitt können z. B. unterschiedliche Radien vorgesehen sein. Allgemein ausgedrückt heisst das, dass zum Variieren der Füllmenge unabhängig von der Form des Querschnitts des Ausstosszylinders eine Fläche des Querschnitts verändert werden kann.

Die Füllvorrichtung umfasst zusätzlich zu dem zumindest einen Ausgang mit Ausstosszylinder und Ausstosselement auch weitere Elemente. Sie verfügt vorzugsweise über einen Vorratsbehälter zum Bereitstellen der Füllung. Dieser befindet sich typischerweise oberhalb der Ausstosszylinder, wobei die Füllung durch eine Öffnung im Boden des Vorratsbehälters in die Ausstosszylinder der Ausgänge beförderbar ist. Je nach Art und Konsistenz der Füllung bzw. je nach verwendetem Ausstosselement reicht hierzu die auf die Füllung wirkende Schwerkraft aus. Zum Befüllen der Ausstosszylinder kann im Vorratsbehälter allerdings auch eine Einzugsvorrichtung vorgesehen sein, welche die Füllung zur Bodenöffnung des Vorratsbehälters befördert und die Ausstosszylinder zwangsbefüllt.

Weiter verfügt die Füllvorrichtung vorzugsweise über eine Transportvorrichtung, um den zu füllenden Teig an den Ausgängen der Füllvorrichtung vorbei zu transportieren. Die Transportvorrichtung ist typischerweise so angeordnet, dass der Teig unter den Ausgängen der Füllvorrichtung vorbeigeführt wird.

Obwohl die Anzahl der Ausgänge der Füllvorrichtung im Prinzip frei wählbar ist, umfasst die Füllvorrichtung bei einer bevorzugten Ausführungsform der Erfindung wenigstens zwei und höchstens zwanzig Ausgänge mit je einem Ausstosszylinder und einem Ausstosselement pro Ausgang. Die dadurch entstehenden Füllmöglichkeiten sowie die Ausmasse der Füllvorrichtung eignen sich gut, um in bestehende Produktionslinien integriert werden zu können.

Die Füllvorrichtung ist typischerweise derart ausgebildet, dass wie bereits beschrieben einfach ein Kolben durch eine Schnecke oder eine Schnecke durch einen Kolben ausgewechselt werden kann. Hierbei wird der Ausstosszylinder typischerweise nicht ersetzt und verbleibt in der Vorrichtung. Bei einer weiteren vorteilhaften Ausbildung der Erfindung sind der Ausstosszylinder und das zugehörige Ausstosselement als Modul ausgebildet, welches derart beschaffen ist, dass es als Ganzes durch ein entsprechendes Modul mit einem anderen Ausstosselement ausgewechselt werden kann. Selbstverständlich kann ein Modul auch durch ein entsprechendes Modul mit demselben Ausstosselement ausgewechselt werden. Dies ist beispielsweise hilfreich, wenn ein Modul defekt ist und durch ein neues ersetzt werden soll.

Neben dem Ausstosszylinder könnten auch weitere Elemente wie z.B. der zugehörige Ausgang, ein passendes Getriebe für das Ausstosselement oder gar ein entsprechender Antrieb in das Modul integriert werden.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: Eine schematische Darstellung einer erfindungsgemässen Füllvorrichtung in einer Seitenansicht;
- Fig. 2: eine schematische Darstellung eines Ausstosszylinders mit einem Kolben als Ausstosselement;
- Fig. 3: eine schematische Darstellung eines Ausstosszylinders mit einer Schnecke als Ausstosselement;
- Fig. 4: eine schematische Darstellung der geöffneten Füllvorrichtung aus Fig. 1 von oben;
- Fig. 5: eine schematische Darstellung des Antriebs der Schnecken zum Ausstossen der Füllung mittels einer Rotationsbewegung von oben;
- Fig. 6: eine schematische Darstellung des Antriebs der Kolben zum Ausstossen der Füllung mittels einer Vorwärts- und Rückwärtsbewegung von oben;
- Fig. 7: eine schematische Darstellung des Antriebs aus Fig. 6 von der Seite,
- Fig. 8: eine schematische Darstellung der Bewegung des Kolbens aus Fig. 6,
- Fig. 9: eine schematische Darstellung der Verschiebung des vorderen und hinteren Umkehrpunktes sowie
- Fig. 10: eine schematische Darstellung der Verschiebung nur des vorderen Umkehrpunktes.

Grundsätzlich sind in den Figuren gleiche Teile mit gleichen Bezugszeichen versehen.

### Wege zur Ausführung der Erfindung

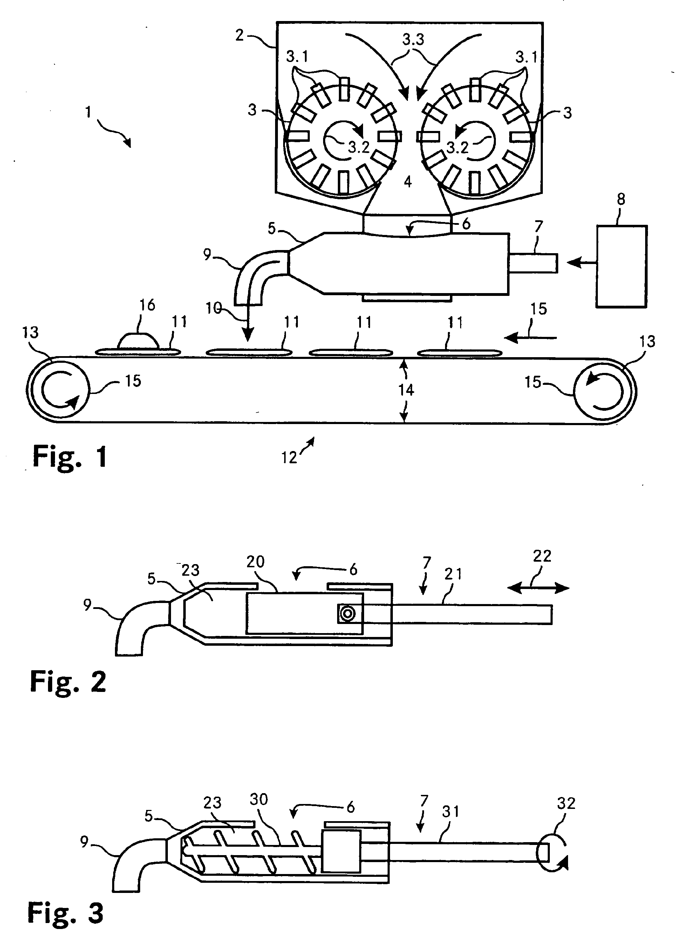

In Figur 1 ist schematisch eine erfindungsgemässe Füllvorrichtung 1 zum Aufbringen einer Füllung auf einen Teig dargestellt. Die Füllvorrichtung 1 umfasst einen Trichter 2, in welchen die aufzubringende Füllung eingefüllt wird. Aufgrund der Schwerkraft oder mit Hilfe von zwei rotierenden Einzugswalzen 3 wird die Füllung im Trichter 2 nach unten befördert, wo sie durch eine Öffnung 4 aus dem Trichter 2 ausgestossen wird. Damit die Füllung effizienter zur Öffnung 4 befördert wird, sind die Einzugswalzen 3 mit exzentrisch mitrotierenden Lamellen 3.1 versehen. Die Rotationsrichtung der Einzugswalzen ist durch die Pfeile 3.2 und die Förderrichtung der Füllung durch die Pfeile 3.3 angedeutet. Anstelle von Lamellen 3.1 können die Einzugswalzen auch mit geeigneten Erhebungen wie z. B. Noppen oder Kämmen bzw. mit geeigneten Vertiefungen wie z. B. Löchern oder Nuten versehen werden.

Direkt unterhalb des Trichters 2 ist ein Zylindergehäuse 5 positioniert, welches einen nicht sichtbaren, im Wesentlichen kreiszylinderförmigen Hohlraum aufweist, der nachfolgend als Ausstosszylinder bezeichnet wird. Die aus dem Trichter 2 ausgestossene Füllung wird durch eine im Zylindergehäuse 5 vorhandene Befüllungsöffnung 6, welche sich direkt unterhalb der Öffnung 4 des Trichters befindet, in den Ausstosszylinder befördert.

Mit einem Ausstosselement 7, welches durch einen geeigneten Antrieb 8 angetrieben wird, wird die Füllung aus dem Ausstosszylinder ausgestossen und via einen Ausgang 9 in Richtung des Pfeiles 10 auf die Teigstücke 11 aufgebracht. Die Teigstücke 11 werden hierfür mittels einer Transportvorrichtung 12 unter dem Ausgang 9 der Füllvorrichtung 1 mit einer bestimmten Geschwindigkeit vorbeigeführt. In dem dargestellten Beispiel umfasst die Transportvorrichtung 12 zwei Rollen 13 sowie ein um die Rollen 13 herumgeführtes und um diese umlaufendes Förderband 14. Die Bewegungsrichtung des Förderbandes 14 ist durch die Pfeile 15 angedeutet. Der Antrieb der Transportvorrichtung 12 sowie die Zuführung der Teigstücke 11 auf das Förderband 14 wie auch die weitere Verarbeitung der gefüllten Teigstücke 11 ist nicht dargestellt.

Bei dem zu füllenden Teig kann es sich nicht nur wie dargestellt um einzelne Teigstücke 11, sondern auch um ein kontinuierliches Teigband handeln.

Je nachdem, wie das Ausstosselement 7 ausgebildet ist und angetrieben wird, kann die Füllung wie dargestellt als Tupfen 16 oder auch als kontinuierlicher Füllungsstreifen auf dem Teig aufgebracht werden.

Zur Klarstellung ist anzumerken, dass in Figur 1 darstellungsbedingt zwar lediglich ein Ausgang 9 mit dem zugehörigen Ausstosszylinder sowie dem zugehörigen Ausstosselement 7 sichtbar ist, dass eine erfindungsgemässe Füllvorrichtung typischerweise jedoch mehrere Ausgänge 9 mit zugehörigem Ausstosszylinder und Ausstosselement 7 umfasst. Zum Ausstossen der Füllung kann nun in jedem Ausstosszylinder wahlweise entweder ein Kolben oder eine Schnecke verwendet werden, wobei ein Kolben jederzeit durch eine Schnecke bzw. eine Schnecke jederzeit durch einen Kolben ausgewechselt werden kann. Das Ausstossen der Füllung mit einem Kolben bzw. einer Schnecke ist in den Figuren 2 und 3 dargestellt.

Figur 2 zeigt ein Zylindergehäuse 5 mit einem Kolben 20 als Ausstosselement 7 im Ausstosszylinder 23. Der Kolben 20 wird im Ausstosszylinder 23 mittels eines Pleuels 21 in eine Vorwärts- und Rückwärtsbewegung versetzt, welche durch den Doppelpfeil 22 angedeutet ist. Der Pleuel 21 wird seinerseits durch den Antrieb 8 angetrieben, wobei zur Erzeugung der Vorwärts- und Rückwärtsbewegung gegebenenfalls ein entsprechendes, nicht dargestelltes Getriebe zwischengeschaltet werden kann.

Das Ausstossen der im Ausstosszylinder 23 vorhandenen Füllung erfolgt während der Vorwärtsbewegung des Kolbens 20 in Richtung des Ausgangs 9, wobei die Befüllungsöffnung 6 durch den Kolben 20 verschlossen wird. Dadurch kann der Kolben im vorderen Bereich des Ausstosszylinders 23 einen Druck auf die Füllung aufbauen und diese aus dem Ausstosszylinder ausstossen und durch den Ausgang 9 auf den Teig aufbringen. Während der Rückwärtsbewegung des Kolbens im Ausstosszylinder 23 wird der Ausstosszylinder 23 im Bereich des Ausgangs 9 verschlossen, wodurch sich ein Vakuum aufbaut. Wenn der Kolben 20 die Befüllungsöffnung 6 bei seiner Rückwärtsbewegung wieder freigibt, wird aufgrund des Vakuums im Ausstosszylinder 23 Füllung aus dem Trichter 2 angesogen. Dann kann das Ausstossen der Füllung erneut beginnen.

Das Verschliessen des Ausstosszylinders 23 während der Rückwärtsbewegung des Kolbens 20 kann beispielsweise mit einer Klappe, einem Schlitzventil, einer Kugel oder einer beliebigen anderen Schliessvorrichtung erfolgen.

Figur 3 zeigt ein Zylindergehäuse 5 mit einer Schnecke 30. Solche Schnecken werden auch als Förderschnecken oder Schneckenförderer bezeichnet. Die Schnecke 30 wird durch die Welle 31 in eine durch den Pfeil 32 angedeutete Rotationsbewegung versetzt. Die Welle 31 wird durch den Antrieb 8 angetrieben, wobei zur Erzeugung der Rotationsbewegung gegebenenfalls ein entsprechendes, nicht dargestelltes Getriebe zwischengeschaltet werden kann.

Das Ausstossen der im Ausstosszylinder 23 vorhandenen Füllung erfolgt hierbei durch die Schnecke, welche die Füllung während ihrer Rotation in Richtung des Ausgangs 8 befördert und so aus dem Ausstosszylinder 23 ausstösst.

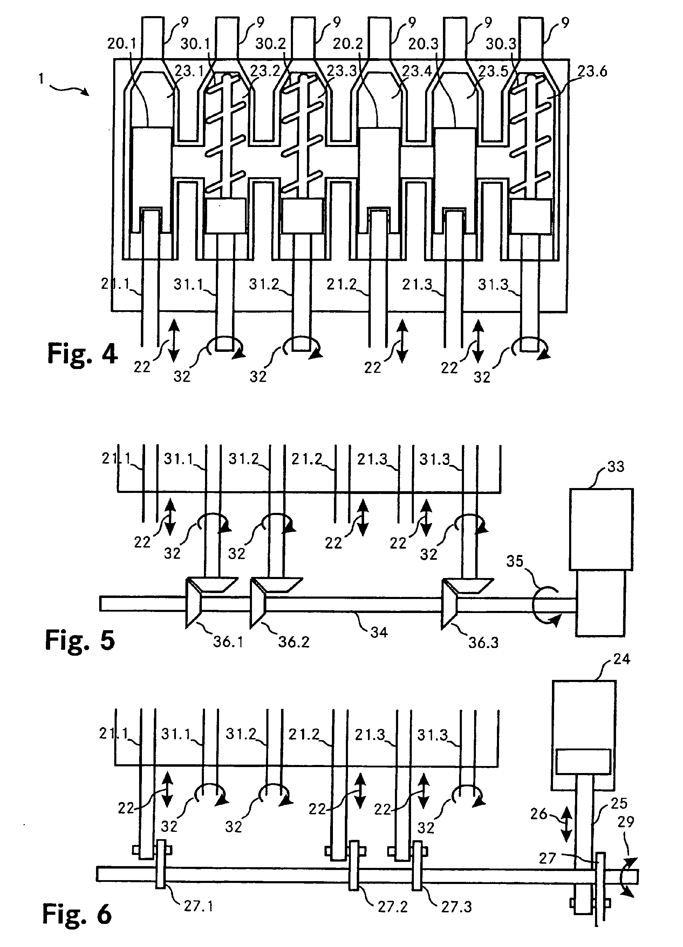

In Figur 4 ist schematisch eine erfindungsgemässe Füllvorrichtung mit sechs Ausgängen 9 sowie sechs zugehörigen Ausstosszylindern 23.1, 23.2, 23.3, 23.4, 23.5, 23.6 dargestellt. Die Ausstosszylinder 23.1, 23.4 und 23.5 sind beispielhaft mit einem Kolben 20.1, 20.2 und 20.3 und zugehörigen Pleueln 21.1, 21.2 und 21.3 bestückt. Die Ausstosszylinder 23.2, 23.3 und 23.6 sind beispielhaft mit einer Schnecke 30.1, 30.2 und 30.3 sowie zugehörigen Wellen 31.1, 31.2 und 31.3 bestückt.

Wird einer oder werden mehrere der Ausgänge 9 nicht zum Aufbringen einer Füllung benötigt, können sie natürlich auch ausser Betrieb gesetzt werden. Dies geschieht beispielsweise, indem das eingesetzte Ausstosselement blockiert wird, damit es die Ausstossbewegung nicht ausführt. Es ist aber auch möglich, kein Ausstosselement in den jeweiligen Ausstosszylinder einzusetzen und die Befüllungsöffnung oder die Ausstossöffnung des Ausstosszylinders mit anderen, beliebigen Mitteln zu verschliessen. Prinzipiell könnte anstelle eines Ausstosszylinders auch eine andere Vorrichtung, beispielsweise ein modifizierter Ausstosszylinder, welcher überhaupt keine Befüllungsöffnung besitzt, eingesetzt werden.

Figur 5 zeigt, wie die Rotationsbewegung der Wellen 31.1, 31.2 und 31.3 und damit auch jene der Schnecken 30.1, 30.2 und 30.3 erzeugt wird. Ein Motor 33 versetzt eine Antriebswelle 34 in eine durch den Pfeil 35 angedeutete Rotationsbewegung. Diese wird durch jeweils ein Zahnradgetriebe 36.1, 36.2, 36.3, beispielsweise je zwei senkrecht zueinander stehende Kegelzahnräder, auf die Wellen 31.1, 31.2 und 31.3 übertragen.

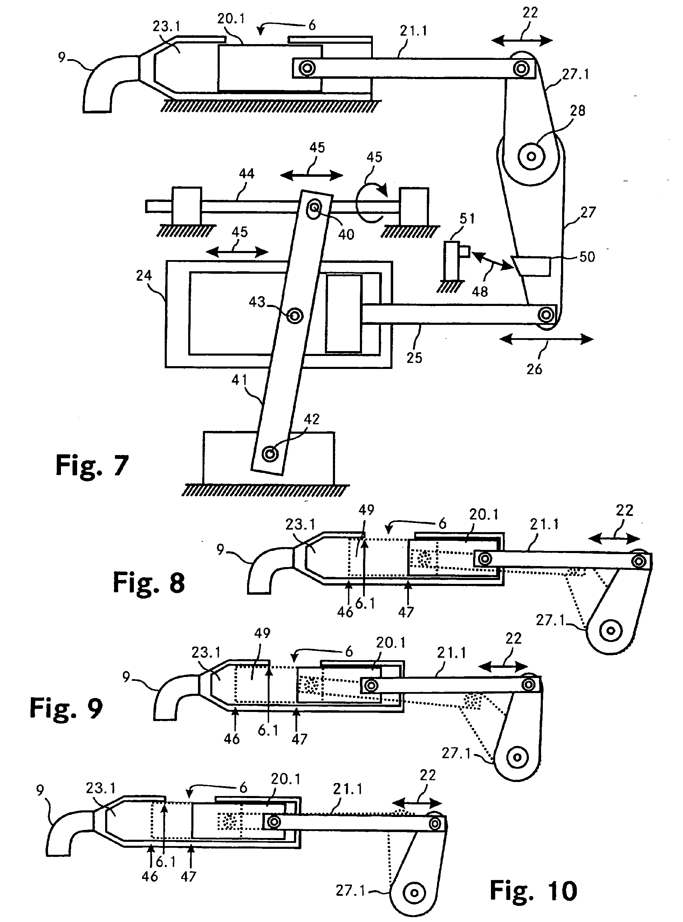

Die Figuren 6 und 7 zeigen, wie die Vorwärts- und Rückwärtsbewegung der Pleuel 21.1, 21.2 und 21.3 und damit auch jene der Kolben 20.1, 20.2 und 20.3 erzeugt wird. Mit Hilfe eines Pneumatikzylinders 24 wird eine Kolbenstange 25 in eine Vorwärts- und Rückwärtsbewegung versetzt, welche durch die Doppelpfeile 26 angedeutet ist. Diese Vorwärts- und Rückwärtsbewegung wird über einen Hebel 27 auf eine Rotationsachse 28 übertragen, deren wechselnde Rotationsbewegung durch den Doppelpfeil 29 angedeutet ist. Mit je einem weiteren, an der Rotationsachse 28 befestigten Hebel 27.1, 27.2 und 27.3 wird die wechselnde Rotationsbewegung der Rotationsachse 28 schliesslich wieder in eine Vorwärts- und Rückwärtsbewegung der Pleuel 21.1, 21.2 und 21.3 umgewandelt.

In Figur 7 sind weitere Aspekte dargestellt. So kann bei einem Kolbensystem beispielsweise die Füllmenge reguliert werden. Hierfür ist der gesamte Pneumatikzylinder 24 mit Hilfe eines Hebels 41, an welchem der Pneumatikzylinder 24 um eine Achse 43 drehbar aufgehängt ist, relativ zur Rotationsachse 28 hin- und her verschiebbar. Der Hebel 41 ist an seinem unteren Ende um eine relativ zur Rotationsachse 28 feste Achse 42 drehbar gelagert. An seinem oberen Ende ist der Hebel 41 via einen Bolzen 40 mit einer Spindel 44 derart verbunden, dass das obere Ende des Hebels 41 durch Drehen der Spindel 44 hin-und herbewegt werden kann. Durch die Verbindung des Pneumatikzylinders 24 mit dem Hebel 41 kann dieser folglich mittels Drehen der Spindel 44 relativ zur Rotationsachse 28 verschoben werden. Die Drehung der Spindel 44 und die Verschiebung des Hebels 41 bzw. des Pneumatikzylinders 24 ist durch die Doppelpfeile 45 angedeutet.

Bei der Rückwärtsbewegung des Kolbens 20.1 im Ausstosszylinder 23.1 wird die Befüllungsöffnung 6 (zumindest teilweise) freigegeben und die Füllung wird wie weiter oben beschrieben durch das entstehende Vakuum in den Ausstosszylinder 23.1 befördert. Hierbei ist zu beachten, dass der in Fig. 7 dargestellte Anschlag 50 sowie der Schalter 51 nicht in Betrieb sind. Dadurch kann der Kolben 20.1 im Ausstosszylinder 23.1 seine Rückwärtsbewegung vollständig ausführen.

Figur 8 zeigt die Grundstellung des Hebels 27.1, bei welcher sich der Kolben 20.1 im hinteren Umkehrpunkt 47 befindet und die Befüllungsöffnung 6 zum grössten Teil freigibt. Beim Ausstossen der Füllung bewegt sich der Kolben nach vorn in Richtung des Ausgangs 9. Die Füllmenge 49 wird nun bestimmt durch das Volumen, dass das vordere Ende des Kolbens 20.1 im Ausstosszylinder 23.1 ab dem vorderen Rand 6.1 der Befüllungsöffnung 6 bis zum vorderen Umkehrpunkt 46 überstreicht. Gestrichelt sind in Fig. 8 zudem die Positionen des Kolbens 20.1, des Pleuels 21.1 und des Hebels 27.1 eingezeichnet, wenn sich der Kolben 20.1 in seinem vorderen Umkehrpunkt 46 befindet. Da sich der Kolben 20.1 in seiner Grundstellung ziemlich weit rechts befindet, ist das überstrichene Volumen und damit die Füllmenge 49 klein.

Ist nun, wie in Fig. 9 dargestellt, der Pneumatikzylinder 24 nach rechts verschoben, wandern der vordere Umkehrpunkt 46 und der hintere Umkehrpunkt 47 gemeinsam nach vorn in Richtung des Ausgangs 9. Dadurch wird das Volumen, das der Kolben ab dem vorderen Rand 6.1 der Befüllungsöffnung 6 bis zum vorderen Umkehrpunkt 46 überstreicht, und damit auch die Füllmenge 49, vergrössert. Hingegen bleibt dabei der Hub des Kolbens 20.1, also die Distanz zwischen den beiden Umkehrpunkten 46 und 47, im Wesentlichen konstant.

Ein weiterer Aspekt, der in Figur 7 sowie in Figur 10 dargestellt ist, betrifft die Erhöhung der Anzahl Hübe pro Zeiteinheit. Am Hebel 27 ist ein Anschlag 50 und ein Schalter 51 ortsfest in Bezug auf den Ausstosszylinder 23.1, beispielsweise am Rahmen der Füllvorrichtung, befestigt. D.h. in der Darstellung in Fig. 10 sind im Gegensatz zur Darstellung in Fig. 8 der Anschlag 50 sowie der Schalter 51 in Betrieb. Wird nun der Schalter 51 während der Rückwärtsbewegung der Kolbenstange 25 und damit des Hebels 27 bzw. des Kolbens 20.1 im Ausstosszylinder 23.1 durch den Anschlag 50 betätigt, was durch den Doppelpfeil 48 angedeutet ist, wird der Pneumatikzylinder 24 umgehend derart angesteuert, dass sich die Kolbenstange 25 und damit auch der Kolben 20.1 wieder vorwärts bewegen. D. h. der Kolben 20.1 im Ausstosszylinder 23.1 kann seine Rückwärtsbewegung nicht vollständig ausführen, sondern wechselt unabhängig von der Position des vorderen Umkehrpunktes jeweils vorzeitig wieder zur Vorwärtsbewegung. Die Positionen des Anschlags 50 bzw. des Schalters 51 sind nun derart gewählt, dass bei der Rückwärtsbewegung des Kolbens 20.1 der Anschlag 50 den Schalter 51 auslöst, sobald der Kolben 20.1 den gewünschten hinteren Umkehrpunkt 47, der beispielsweise etwa in der Mitte der Befüllungsöffnung 6 liegt, erreicht hat.

Da hierbei wie bereits erwähnt die Rückwärtsbewegung des Kolbens 20.1 weniger weit ausgeführt wird, beginnt der Ausstosszyklus früher. Folglich ist die Anzahl der Hübe pro Zeiteinheit, d. h. die Ausstossfrequenz, mit welcher der Kolben die Füllung aus dem Ausstosszylinder 23.1 ausstösst, höher.

Indem nun die Position des Pneumatikzylinders 24 mit Hilfe der Spindel 44 verändert wird, was durch den Doppelpfeil 45 angedeutet ist, kann die Position des vorderen Umkehrpunktes 46 eingestellt werden. Hierbei bleibt die Position des hinteren Umkehrpunktes 47 unverändert, denn diese wird allein durch die Anordnung des Schalters 51 und des Anschlags 50 bestimmt. Je weiter also der Pneumatikzylinder 24 gemäss der Darstellung in Figur 7 nach links verschoben wird, desto weiter rechts befindet sich der vordere Umkehrpunkt 46, desto geringer ist somit die Füllmenge 49 und desto kleiner wird gleichzeitig der Hub des Kolbens 20.1 und damit desto grösser die Ausstossfrequenz.

Selbstverständlich können die Positionen von Anschlag 50 und Schalter 51 auch vertauscht oder sowohl der Anschlag 50 als auch der Schalter 51 an anderen Orten positioniert werden. So könnte der Anschlag beispielsweise ortsfest in Bezug auf den Ausstosszylinder 23.1 oder an einem beliebigen anderen Ort wie beispielsweise am Pleuel 21.1, am Hebel 27.1 oder auch an der Achse 28 befestigt sein, wobei der Schalter derart positioniert werden muss, dass er vom Anschlag 50 im richtigen Moment betätigt werden kann. Natürlich ist es auch möglich, die Positionsbestimmung des Kolbens 20.1 mit beliebigen anderen Sensoren durchzuführen, damit die Rückwärtsbewegung des Kolbens 20.1 an einem bestimmten Punkt gestoppt und dessen Vorwärtsbewegung eingeleitet werden kann.

Zusammenfassend ist festzustellen, dass es die Erfindung erlaubt, in einer einzigen Füllvorrichtung die Füllung sowohl mittels Kolben als auch mittels Schnecken auf den Teig aufzubringen. Bei einem bestimmten Ausgang kann also je nach Wunsch zeitlich hintereinander mit einem Kolben oder einer Schnecke gefüllt werden. Und bei mehreren Ausgängen ist es daher erforderlichenfalls möglich, einen oder mehrere Ausgänge mit einem Kolben und gleichzeitig einen oder mehrere Ausgänge mit einer Schnecke zu betreiben.

Bei reinen Kolbensystemen ist zudem festzustellen, dass durch das vorzeitige Abbrechen der Rückwärtsbewegung der Kolben eine Erhöhung der Hubfrequenz erreicht werden kann. Dadurch ist es möglich, die gewünschten Backwaren schneller und somit günstiger herzustellen.

## Patentansprüche

1. Vorrichtung (1) mit zumindest einem Ausgang (9) zum Aufbringen einer Füllung auf eine teigartige Lebensmittelmasse, insbesondere einen Teig, sowie je einem Ausstosszylinder (23.1-23.6) und einem Ausstosselement (20.1-20.3, 30.1-30.3) für den zumindest einen Ausgang, wobei die Füllung mit dem Ausstosselement aus dem Ausstosszylinder ausstoss- und durch den zumindest einen Ausgang auf die Lebensmittelmasse aufbringbar ist, **dadurch gekennzeichnet, dass** das Ausstosselement des zumindest einen Ausgangs einen Kolben (20.1-20.3) zum Ausstossen der Füllung durch eine Vorwärts- und Rückwärtsbewegung (22) des Kolbens im Ausstosszylinder oder eine Schnecke (30.1-30.3) zum Ausstossen der Füllung durch eine Rotationsbewegung (32) der Schnecke umfasst, wobei ein Ausstosselement mit einem Kolben durch ein Ausstosselement mit einer Schnecke und umgekehrt auswechselbar ist.

2. Vorrichtung nach Anspruch 1, **dadurch gekennzeichnet, dass** sie wenigstens einen Antrieb (8) zur Erzeugung einer Antriebsbewegung (35, 26) und je zumindest ein Getriebe (36.1-36.3, 27, 27.1-27.3) pro Ausgang zur Umwandlung der Antriebsbewegung in die Vorwärts- und Rückwärtsbewegung eines Kolbens bzw. in die Rotationsbewegung einer Schnecke umfasst.

3. Vorrichtung nach Anspruch 2, **dadurch gekennzeichnet, dass** sie einen pneumatischen Antrieb (24) zum Erzeugen der Vorwärts- und Rückwärtsbewegung eines Kolbens und einen motorischen Antrieb (33) zum Erzeugen der Rotationsbewegung einer Schnecke umfasst.

4. Vorrichtung nach einem der Ansprüche 1 bis 3, **dadurch gekennzeichnet, dass** eine Winkelgeschwindigkeit der Rotationsbewegung einer Schnecke und/oder eine Form der Schnecke variierbar ist.

5. Vorrichtung nach einem der Ansprüche 1 bis 4, **dadurch gekennzeichnet, dass** sie derart ausgebildet ist, dass ein Kolben (20.1) in dem Ausstosszylinder (23.1) in einem vorderen Umkehrpunkt von der Vorwärtsbewegung in die Rückwärtsbewegung und in einem hinteren Umkehrpunkt von der Rückwärtsbewegung in die Vorwärtsbewegung übergeht, wobei der Ausstosszylinder bei der Rückwärtsbewegung des Kolbens durch eine Befüllungsöffnung (6) mit der Füllung befüllbar und die Füllung bei der Vorwärtsbewegung des Kolbens durch den Ausstosszylinder ausstossbar ist, und dass eine Frequenz der Vorwärts- und Rückwärtsbewegung des Kolbens und/oder eine Position des vorderen und gleichzeitig des hinteren Umkehrpunktes relativ zur Befüllungsöffnung variierbar ist.

6. Vorrichtung nach Anspruch 5, **dadurch gekennzeichnet, dass** eine Position des hinteren Umkehrpunktes und/oder eine Position des vorderen Umkehrpunktes unabhängig von der Position des jeweils anderen Umkehrpunktes einstellbar ist.

7. Vorrichtung nach einem der Ansprüche 1 bis 6, **dadurch gekennzeichnet, dass** ein Querschnitt des Ausstosszylinders variierbar ist.

8. Vorrichtung nach einem der Ansprüche 1 bis 7, **dadurch gekennzeichnet, dass** sie einen Vorratsbehälter (2) für die Füllung sowie eine Transportvorrichtung (12) zum Transportieren der Lebensmittelmasse (11) umfasst, wobei die Füllung aus dem Vorratsbehälter, insbesondere mittels einer Einzugsvorrichtung (3), in den Ausstosszylinder des zumindest einen Ausgangs (9) beförderbar ist und die Lebensmittelmasse mit der Transportvorrichtung an dem zumindest einen Ausgang vorbei, insbesondere unter dem zumindest einen Ausgang hindurch, transportierbar ist.

9. Vorrichtung nach einem der Ansprüche 1 bis 8, **dadurch gekennzeichnet, dass** sie wenigstens zwei und höchstens zwanzig Ausgänge und je einen Ausstosszylinder und ein Ausstosselement pro Ausgang umfasst.

10. Vorrichtung nach einem der Ansprüche 1 bis 9, **dadurch gekennzeichnet, dass** ein Ausstosszylinder (23.1-23.6) zusammen mit dem entsprechenden Ausstosselement (7) derart als Modul ausgebildet ist, dass das Modul mit dem Ausstosselement durch ein entsprechendes Modul mit einem anderen Ausstosselement auswechselbar ist.

## Claims

1. Device (1) with at least one outlet (9) for applying a stuffing to a dough-like food substance, in particular a dough, as well as a discharge cylinder (23.1-23.6) and a discharge element (20.1-20.3, 30.1-30.3) in each case for the at least one outlet, wherein the stuffing can be discharged from the discharge cylinder by the discharge element and applied to the food substance through the at least one outlet, **characterised in that** the discharge element of the at least one outlet comprises a piston (20.1-20.3) for discharging the stuffing through a forward and return movement (22) of the piston in the discharge cylinder or a worm (30.1-30.3) for discharging the stuffing through a rotational movement (32) of the worm, wherein a discharge element with a piston can be replaced by a discharge element with a worm and vice versa.

2. Device according to Claim 1, **characterised in that** it comprises at least one drive (8) for producing a drive movement (35, 26) and at least one gear unit (36.1-36.3, 27, 27.1-27.3) in each case for each outlet for converting the drive movement into the forward and return movement of a piston or into the rotational movement of a worm.

3. Device according to Claim 2, **characterised in that** it comprises a pneumatic drive (24) for producing the forward and return movement of a piston and a motor drive (33) for producing the rotational movement of a worm.

4. Device according to any one of Claims 1 to 3, **characterised in that** an angular velocity of the rotational movement of a worm and/or a form of the worm can be varied.

5. Device according to any one of Claims 1 to 4, **characterised in that** it is formed such that a piston (20.1) in the discharge cylinder (23.1) changes from the forward movement to the return movement at a front reversal point and from the return movement to the forward movement at a rear reversal point, wherein the discharge cylinder can be filled with the stuffing through a filling opening (6) during the return movement of the piston, and the stuffing can be discharged by the discharge cylinder during the forward movement of the piston, and that a frequency of the forward and return movement of the piston and/or a position of the front and at the same time of the rear reversal point relative to the filling opening can be varied.

6. Device according to Claim 5, **characterised in that** a position of the rear reversal point and/or a position of the front reversal point can be set independently of the position of the respective other reversal point.

7. Device according to any one of Claims 1 to 6, **characterised in that** a cross section of the discharge cylinder can be varied.

8. Device according to any one of Claims 1 to 7, **characterised in that** it comprises a storage container (2) for the stuffing as well as a transport device (12) for transporting the food substance (11), wherein the stuffing can be conveyed out of the storage container, in particular by means of a feed device (3), into the discharge cylinder of the at least one outlet (9), and the food substance can be transported by the transport device past the at least one outlet, in particular below the at least one outlet.

9. Device according to any one of Claims 1 to 8, **characterised in that** it comprises at least two and at most twenty outlets and a discharge cylinder and a discharge element in each case for each outlet.

10. Device according to any one of Claims 1 to 9, **characterised in that** a discharge cylinder (23.1-23.6) is formed together with the corresponding discharge element (7) as a module such that the module, with the discharge element, can be replaced by a corresponding module with another discharge element.

## Revendications

1. Dispositif (1) comportant au moins une sortie (9) pour l'application d'une farce sur une masse de produit alimentaire pâteux, en particulier une pâte, ainsi que respectivement un cylindre d'expulsion (23.1-23.6) et un élément d'expulsion (20.1-20.3, 30.1-30.3) pour la au moins une sortie, dispositif dans lequel la farce peut être appliquée avec l'élément d'expulsion du cylindre d'expulsion et par la au moins une sortie sur la masse de produit alimentaire en pâte, **caractérisé en ce que** l'élément d'expulsion de la au moins une sortie comprend un piston (20.1-20.3) pour l'expulsion de la farce par un mouvement de va-et-vient (22) du piston dans le cylindre d'expulsion ou une vis sans fin (30.1-30.3) pour l'expulsion de la farce par un mouvement de rotation (32) de la vis sans fin, dispositif dans lequel un élément d'expulsion avec un piston peut être remplacé par un élément d'expulsion avec une vis sans fin et vice versa.

2. Dispositif selon la revendication 1, **caractérisé en ce qu'**il comprend au moins un entraînement (8) pour la production d'un mouvement d'entraînement (35, 26) et respectivement au moins un engrenage (36.1-36.3, 27, 27.1-27.3) par sortie pour la transformation du mouvement d'entraînement en mouvement de va-et-vient d'un piston ou en mouvement de rotation d'une vis sans fin.

3. Dispositif selon la revendication 2, **caractérisé en ce qu'**il comprend un entraînement pneumatique (24) pour la production du mouvement de va-et-vient d'un piston et un entraînement à moteur (33) pour la production d'un mouvement de rotation d'une vis sans fin.

4. Dispositif selon l'une des revendications 1 à 3, **caractérisé en ce qu'**une vitesse angulaire du mouvement de rotation d'une vis sans fin et/ou une forme de vis sans fin est variable.

5. Dispositif selon l'une des revendications 1 à 4, **caractérisé en ce qu'**il est conçu de telle sorte qu'un piston (20.1) dans le cylindre d'expulsion (23.1) transfère au point d'inversion avant du mouvement vers l'avant, en mouvement vers l'arrière, et en un point d'inversion arrière du mouvement arrière vers le mouvement avant, dispositif dans lequel le cylindre d'expulsion, lors du mouvement vers l'arrière du piston, peut être rempli de la farce par une ouverture de remplissage (6) et la farce peut être expulsée lors du mouvement vers l'arrière du piston par le cylindre d'expulsion, et **en ce qu'**il est possible de faire varier une fréquence du mouvement de va-et-vient du piston et/ou une position du point d'inversion avant et simultanément du point d'inversion arrière en fonction de l'ouverture de remplissage.

6. Dispositif selon la revendication 5, **caractérisé en ce qu'**une position du point d'inversion arrière et/ou une position du point d'inversion avant peut être ajustée indépendamment de la position de l'autre point d'inversion respectif.

7. Dispositif selon l'une des revendications 1 à 6, **caractérisé en ce qu'**il est possible de faire varier une section transversale du cylindre d'expulsion.

8. Dispositif selon l'une des revendications 1 à 7,
**caractérisé en ce qu'**il comprend un réservoir de stockage (2) pour le remplissage, ainsi qu'un dispositif de transport (12) pour l'acheminement de la masse de produit alimentaire (11), dispositif dans lequel la farce en provenance du récipient de stockage peut être acheminée, en particulier au moyen d'un dispositif d'introduction (3), dans le cylindre d'expulsion de la au moins une sortie (9) et la masse de produit alimentaire peut être acheminée par le dispositif de transport sur la au moins une sortie, en particulier sous la au moins une sortie.

9. Dispositif selon l'une des revendications 1 à 8, **caractérisé en ce qu'**il comprend au moins deux et au maximum vingt sorties et, respectivement, un cylindre d'expulsion et un élément d'expulsion par sortie.

10. Dispositif selon l'une des revendications 1 à 9, **caractérisé en ce qu'**un cylindre d'expulsion (23.1-23.6), conjointement avec l'élément d'expulsion correspondant (7), est conçu sous forme de module, de telle sorte que le module comportant l'élément d'expulsion peut être remplacé par un module correspondant, comportant un autre élément d'expulsion.
